# EUROPÄISCHE PATENTSCHRIFT

(11) **EP 1 884 431 B1**
(45) Veröffentlichungstag und Bekanntmachung des Hinweises auf die Patenterteilung: **22.12.2010**
(21) Anmeldenummer: 06015886.2
(22) Anmeldetag: 31.07.2006
(51) Int. Cl.: B61B 10/02, B60L 15/00, B65G 17/38

(54) **Fahrzeugantriebssystem, Fahrzeugantriebseinheit, Verfahren und Steuerungsprogramm zum Betrieb eines Fahrzeugantriebssystems**
Vehicle drive system, vehicle drive unit, method and program for controlling a vehicle drive system
Système et ensemble de traction pour véhicule, procédé et programme de commande de système de traction pour véhicule

(43) Veröffentlichungstag der Anmeldung: 06.02.2008
(73) Patentinhaber: SIEMENS AKTIENGESELLSCHAFT, 80333 München (DE)
(72) Erfinder: Hamann, Jens, Dr., 90765 Fürth (DE); Ladre, Uwe, 91056 Erlangen (DE); Recktenwald, Alois, 91074 Herzogenaurach (DE); Stoiber, Dietmar, 90763 Fürth (DE)

(56) Entgegenhaltungen:
- DE-A1- 2 044 400
- JP-A- 11 322 041

## Beschreibung

Insbesondere bei Containerhafenanlagen besteht das Bedürfnis nach Antriebssystemen, mit denen große Lasten schnell bewegt werden können, um auf diese Weise Umschlagszeiten für in Containern transportierten Gütern zu minimieren. Bisherige Rad-Schiene-Systeme können diese Anforderungen speziell bei sehr großen Containerhafenanlagen aufgrund verhältnismäßig geringer maximaler Beschleunigung im Bereich von ca. 0,4 m/s² und sich daraus ergebender langer Transportzeiten nur ansatzweise erfüllen. Deutlich bessere Beschleunigungswerte und höhere Geschwindigkeiten bieten in W.-R. Canders et al. "Linear Motor Transfer Technology (LMTT) for Container Terminals" LDIA '98 Tokyo, Japan beschriebene Linearmotorsysteme.

Aus DE 2 044 400 A1 ist ein Verfahren zum Betrieb eines Fahrzeugantriebssystems bekannt, bei dem zumindest eine umlaufende Antriebskette mit im wesentlichen konstanter Umlaufgeschwindigkeit betrieben wird.

Ausgehend vom bekannten Stand der Technik liegt der vorliegenden Erfindung die Aufgabe zugrunde, ein kostengünstiges Fahrzeugantriebssystem anzugeben, das einen schnellen Transport schwerer Lasten ermöglicht.

Diese Aufgabe wird erfindungsgemäß durch ein Fahrzeugantriebssystem mit den in Anspruch 1 angegebenen Merkmalen gelöst. Eine für das erfindungsgemäße Fahrzeugantriebssystem geeignete Fahrzeugantriebseinheit sowie ein Verfahren und ein Steuerungsprogramm zum Betrieb eines Fahrzeugantriebssystems sind in den Ansprüchen 7, 8 und 9 angegeben. Vorteilhafte Weiterbildungen der vorliegenden Erfindung sind in den abhängigen Ansprüchen angegeben.

Ein wesentlicher Aspekt der vorliegenden Erfindung liegt darin, daß eine entlang eines Fahrweges bewegliche Antriebskette vorgesehen ist, die eine Läufereinheit eines Asynchronmotors bildet, und daß das erfindungsgemäße Fahrzeugantriebssystem zumindest eine an einem Fahrzeug vorgesehene Magneteinrichtung aufweist, die zur Kraftübertragung von der Antriebskette auf das Fahrzeug mit der Antriebskette magnetisch koppelbar ist. Ein solches Fahrzeugantriebssystem erlaubt für Lasten von mehr als 100t Gewicht Beschleunigungen mit mindestens 1 m/s².

Ein besonders günstiger Systemaufbau ergibt sich bei einem System mit mehreren im wesentlich parallelen Fahrwegen, wenn die Antriebskette entlang eines zweiten im wesentlichen parallelen Fahrweges umlaufend beweglich ist. Vorzugsweise ist am Fahrzeug eine zweite Magneteinrichtung vorgesehen, die mit einer zweiten entlang des Fahrweges gegenläufig beweglichen Antriebskette magnetisch koppelbar ist. Hierdurch kann eine Antriebskette für mehrere Fahrwege gleichzeitig zum Beschleunigen oder Bremsen genutzt werden.

Zur bedarfsgerechten Regelung von Beschleunigung und Verzögerung ist die Kraftübertragung von der Antriebskette auf das Fahrzeug durch Einstellung eines vorgebbaren Luftspalts zwischen der Antriebskette und der Magneteinrichtung regulierbar.

Entsprechend einer bevorzugten Weiterbildung der vorliegenden Erfindung sind Elemente der Antriebskette als Elemente eines Asynchronkäfigläufers ausgestaltet, und die zumindest eine Magneteinrichtung ist als Permanentmagnetanordnung ausgestaltet. Hieraus resultiert ein einfach zu realisierender Systemaufbau.

Eine für das Fahrzeugantriebssystem gemäß Anspruch 1 geeignete Fahrzeugantriebseinheit umfaßt erfindungsgemäß eine Magneteinrichtung, die zur Kraftübertragung von einer Antriebskette auf ein Fahrzeug mit der Antriebskette magnetisch koppelbar ist.

Entsprechend dem erfindungsgemäßen Verfahren zum Betrieb eines Fahrzeugantriebssystems wird zumindest eine umlaufende Antriebskette mit im wesentlichen konstanter Umlaufgeschwindigkeit betrieben. Erfindungsgemäß wird ein Fahrzeug durch Herstellen einer magnetischen Kopplung zwischen einer sich entlang des Fahrwegs in Fahrtrichtung bewegenden Antriebskette und einer dieser zugewandten Magneteinrichtung beschleunigt. Ein Abbremsen eines Fahrzeugs erfolgt erfindungsgemäß durch Herstellen einer magnetischen Kopplung zwischen einer sich entlang des Fahrwegs entgegen der Fahrtrichtung bewegenden Antriebskette und einer dieser zugewandten Magneteinrichtung.

Darüber hinaus bietet ein geregeltes Beschleunigen mittels einer sich in Fahrtrichtung bewegenden Antriebskette und ein geregeltes Bremsen mittels einer sich entgegen der Fahrtrichtung bewegenden Antriebskette den Vorteil einer sehr genauen Positionierbarkeit des Fahrzeugs.

Das erfindungsgemäße Verfahren zum Betrieb eines Fahrzeugantriebssystems wird bevorzugt durch ein Steuerungsprogramm implementiert, das in einen Arbeitsspeicher eines Rechners ladbar ist. Das Steuerungsprogramm weist zumindest einen Codeabschnitt auf, bei dessen Ausführung zumindest eine umlaufende Antriebskette mit im wesentlichen konstanter Umlaufgeschwindigkeit betrieben wird, wenn das Steuerungsprogramm im Rechner abläuft. Außerdem wird ein Fahrzeug durch Herstellen einer magnetischen Kopplung zwischen einer sich entlang des Fahrwegs in Fahrtrichtung bewegenden Antriebskette und einer dieser zugewandten Magneteinrichtung beschleunigt. In entsprechender Weise wird ein Fahrzeug durch Herstellen einer magnetischen Kopplung zwischen einer sich entlang des Fahrwegs entgegen der Fahrtrichtung bewegenden Antriebskette und einer dieser zugewandten Magneteinrichtung abgebremst.

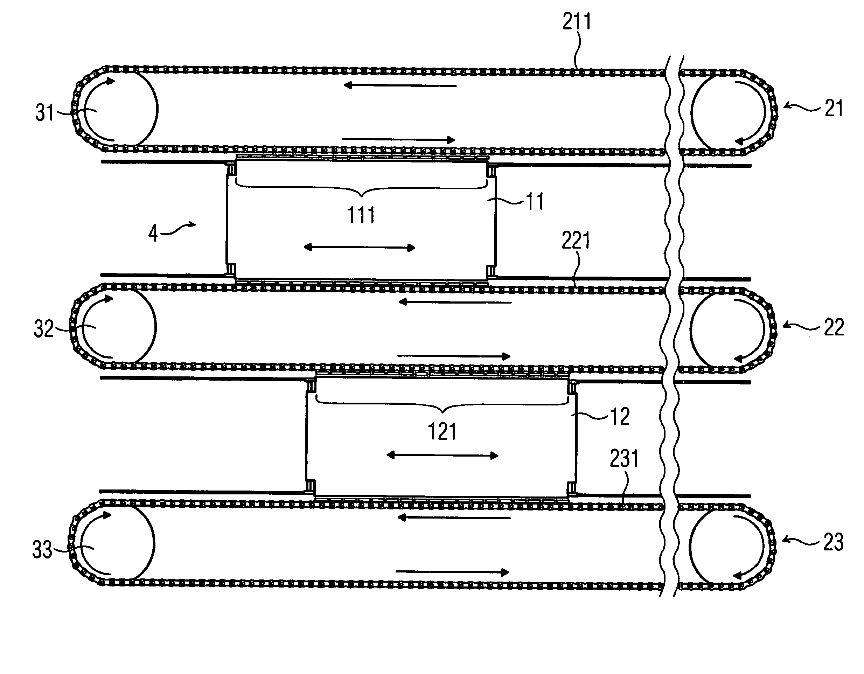

Die Erfindung wird nachfolgend an einem Ausführungsbeispiel anhand der Zeichnung näher erläutert. Es zeigt die
- Figur: ein schematisch dargestelltes Fahrzeugantriebssy- stem in der Draufsicht.

Ein in der Figur dargestelltes Fahrzeug 11, 12 wird über eine asynchrone Magnetkupplung angetrieben. Dazu sind Permanentmagnete 111, 121 an Seitenflächen des Fahrzeugs 11, 12 angebracht. Entlang eines Fahrweges 4 befinden sich jeweils zu beiden Seiten des Fahrzeugs 11, 12 umlaufende Reaktionsteilketten 21 - 23, deren Elemente 211, 221, 231 als Elemente eines Asynchronkäfigläufers ausgestaltet sind und durch einen drehfelderzeugenden Stator 31 -33 erregt werden. Die Elemente 211, 221, 231 können geblecht oder massiv sein, unterschiedliche Formen aufweisen sowie aus Kupfer oder Aluminium sein.

Die umlaufenden Ketten 21 - 23 sind geschwindigkeitsgeregelt und brauchen nur einmal beim Hochlauf beschleunigt zu werden. Wegen ihres großen Trägheitsmomentes dienen die Ketten 21 -23 als Schwungspeicher. Damit zur Induzierung von Strömen in den Elementen 211, 221, 231 eine Flußänderung vorhanden ist, müssen die Ketten 21 -23 mit einer größeren Geschwindigkeit als die Fahrzeuge 11, 12 umlaufen, deren Geschwindigkeit etwa 300 m/min beträgt.

Über eine Abstandsregelung wird der Luftspalt zwischen den Permanentmagneten 111, 121, die vorzugsweise aus Ferrit bestehen, und den Elementen 211, 221, 231 der Reaktionsteilketten 21 - 23 verändert. Zur Einstellung einer Kraftübertragung auf die Fahrzeuge 11, 12 wird damit ein Induktions- bzw. Flußniveau vorgegeben, wodurch eine genaue Positionierung der Fahrzeuge 11, 12 ermöglicht wird. Grundsätzlich ist damit eine Positioniergenauigkeit von 10 mm realisierrbar.

Mit dem vorliegenden Fahrzeugantriebssystem auf Basis einer asynchronen Magnetkupplung können Beschleunigungswerte von über 1 m/s² realisiert werden. Ein großer Vorteil bei diesem Antriebskonzept ist die Energieübertragung auf den Kettenantrieb als feststehendem System. Auf die Fahrzeuge 11, 12 wird grundsätzlich nur Energie für die Abstandsregelung der Permanentmagnete 111, 121 zu den 211, 221, 231 der Reaktionsteilketten 21 - 23. Da dieser Energiebedarf sehr gering ist, kann die Energieversorgung der Fahrzeuge 11, 12 sogar mit Akkus in oder auf den Fahrzeugen 11, 12 erfolgen.

Die an den Außenseiten der Fahrzeuge 11, 12 vorbeilaufenden Reaktionsteilketten 21 - 23 haben entlang eines Fahrweges 4 für ein Fahrzeug 11, 12 entgegengesetzte Laufrichtungen. Zu welcher Reaktionsteilketten 21 - 23 über die Permanentmagnete 111, 121 eingekoppelt wird, legt die Bewegungsrichtung des jeweiligen Fahrzeugs 11, 12 fest. Zusätzlich können Bremskräfte über den Kettenantrieb aufgebracht werden, wenn eine ziehende Kettenseite ausgekoppelt und eine entgegengesetzt laufende Kettenseite eingekoppelt wird.

Darüber hinaus können die Fahrzeuge 11, 12 auch innerhalb der Reaktionsteilketten 21 - 23 angeordnet werden. Ein Einkoppeln eines Fahrzeugs über die Permanentmagnete erfolgt in diesem Fall an den Innenseiten einer Reaktionsteilkette 21 - 23. Die Bewegungsrichtung ergibt sich auch hier daraus, zu welcher Seite eingekoppelt wird.

Die Anwendung der vorliegenden Erfindung ist nicht auf das beschriebene Ausführungsbeispiel beschränkt.

## Patentansprüche

1. Fahrzeugantriebssystem mit
- einer entlang eines Fahrweges (4) beweglichen Antriebskette (21-23), die eine Läufereinheit (211, 221, 231) eines Asynchronmotors bildet,
- zumindest einer an einem Fahrzeug (11, 12) vorgesehenen Magneteinrichtung (111, 121), die zur Kraftübertragung von der Antriebskette (21-23) auf das Fahrzeug (11, 12) mit der Antriebskette (21-23) magnetisch koppelbar ist.

2. Fahrzeugantriebssystem nach Anspruch 1, bei dem die Antriebskette (21-23) entlang eines zweiten im wesentlichen parallelen Fahrweges umlaufend beweglich ist.

3. Fahrzeugantriebssystem nach einem der Ansprüche 1 oder 2, bei dem
am Fahrzeug (11, 12) eine zweite Magneteinrichtung vorgesehen ist, die mit einer zweiten entlang des Fahrweges gegenläufig beweglichen Antriebskette (21-23) magnetisch koppelbar ist.

4. Fahrzeugantriebssystem nach einem der Ansprüche 1 bis 3, bei dem
die Kraftübertragung von der Antriebskette (21-23) auf das Fahrzeug (11,12) durch Einstellung eines vorgebbaren Luftspalts zwischen der Antriebskette (21-23) und der Magneteinrichtung (111, 121) regulierbar ist.

5. Fahrzeugantriebssystem nach einem der Ansprüche 1 bis 4, bei dem
Elemente der Antriebskette (21-23) als Elemente eines Asynchronkäfigläufers ausgestaltet sind.

6. Fahrzeugantriebssystem nach einem der Ansprüche 1 bis 5, bei dem
die zumindest eine Magneteinrichtung (111, 121) als Permanentmagnetanordnung ausgestaltet ist.

7. Fahrzeugantriebseinheit mit
- einer Magneteinrichtung (111, 121), die zur Kraftübertragung von einer Antriebskette (21-23) auf ein Fahrzeug (11, 12) mit der Antriebskette (21-23) magnetisch koppelbar ist.

8. Verfahren zum Betrieb eines Fahrzeugantriebssystems nach einem der Ansprüche 1 bis 6, bei dem
- zumindest eine umlaufende Antriebskett (21-23) mit im wesentlichen konstanter Umlaufgeschwindigkeit betrieben wird,
**dadurch gekennzeichnet, daß**
- ein Fahrzeug (11, 12) durch Herstellen einer magnetischen Kopplung zwischen einer sich entlang des Fahrwegs (4) in Fahrtrichtung bewegenden Antriebskette (21-23) und einer dieser zugewandten Magneteinrichtung (111, 121) beschleunigt wird,
- ein Fahrzeug (11, 12) durch Herstellen einer magnetischen Kopplung zwischen einer sich entlang des Fahrwegs (4) entgegen der Fahrtrichtung bewegenden Antriebskette (21-23) und einer dieser zugewandten Magneteinrichtung (111, 121) abgebremst wird.

9. Steuerungsprogramm zum Betrieb eines Fahrzeugantriebssystems nach einem der Ansprüche 1 bis 6, das in einen Arbeitsspeicher eines Rechners ladbar ist und zumindest einen Codeabschnitt aufweist, bei dessen Ausführung
- zumindest eine umlaufende Antriebskette (21-23) mit im wesentlichen konstanter Umlaufgeschwindigkeit betrieben wird,
- ein Fahrzeug (11, 12) durch Herstellen einer magnetischen Kopplung zwischen einer sich entlang des Fahrwegs (4) in Fahrtrichtung bewegenden Antriebskette (21-23) und einer dieser zugewandten Magneteinrichtung (111, 121) beschleunigt wird,
- ein Fahrzeug (11, 12) durch Herstellen einer magnetischen Kopplung zwischen einer sich entlang des Fahrwegs (4) entgegen der Fahrtrichtung bewegenden Antriebskette (21-23) und einer dieser zugewandten Magneteinrichtung (111, 121) abgebremst wird,
wenn das Steuerungsprogramm im Rechner abläuft.

## Claims

1. Vehicle drive system having
- a drive chain (21-23) which can move along a pathway (4) and forms a rotor unit (211, 221, 231) of an asynchronous motor,
- at least one magnet device (111, 121) which is provided on a vehicle (11, 12) and can be magnetically coupled to the drive chain (21-23) in order to transmit force from the drive chain (21-23) to the vehicle (11, 12).

2. Vehicle drive system according to Claim 1, in which the drive chain (21-23) can circulate along a second substantially parallel pathway.

3. Vehicle drive system according to either of Claims 1 and 2, in which a second magnet device is provided on the vehicle (11, 12) and can be magnetically coupled to a second drive chain (21-23) which can move in the opposite direction along the pathway.

4. Vehicle drive system according to one of Claims 1 to 3, in which the transmission of force from the drive chain (21-23) to the vehicle (11, 12) can be regulated by adjusting a predefinable air gap between the drive chain (21-23) and the magnet device (111, 121).

5. Vehicle drive system according to one of Claims 1 to 4, in which elements of the drive chain (21-23) are designed as elements of an asynchronous squirrel-cage rotor.

6. Vehicle drive system according to one of Claims 1 to 5, in which the at least one magnet device (111, 121) is designed as a permanent magnet arrangement.

7. Vehicle drive unit having
- a magnet device (111, 121) which can be magnetically coupled to the drive chain (21-23) in order to transmit force from a drive chain (21-23) to a vehicle (11, 12).

8. Method for operating a vehicle drive system according to one of Claims 1 to 6, in which
- at least one circulating drive chain (21-23) is operated at a substantially constant circulation speed,
**characterized in that**
- a vehicle (11, 12) is accelerated by producing a magnetic coupling between a drive chain (21-23) which moves along the pathway (4) in the direction of travel and a magnet device (111, 121) which faces the said drive chain,
- a vehicle (11, 12) is braked by producing a magnetic coupling between a drive chain (21-23) which moves along the pathway (4) opposite the direction of travel and a magnet device (111, 121) which faces the said drive chain.

9. Control program for operating a vehicle drive system according to one of Claims 1 to 6, which can be loaded into a working memory of a computer and has at least one code section, during the execution of which control program
- at least one circulating drive chain (21-23) is operated at a substantially constant circulation speed,
- a vehicle (11, 12) is accelerated by producing a magnetic coupling between a drive chain (21-23) which moves along the pathway (4) in the direction of travel and a magnet device (111, 121) which faces the said drive chain,
- a vehicle (11, 12) is braked by producing a magnetic coupling between a drive chain (21-23) which moves along the pathway (4) opposite the direction of travel and a magnet device (111, 121) which faces the said drive chain,
when the control program is run in the computer.

## Revendications

1. Système de traction de véhicule, comprenant
- une chaîne ( 21 à 23 ) de traction mobile le long d'une voie ( 4 ) de communication et formant un groupe ( 211, 221, 231 ) rotorique d'un moteur asynchrone,
- au moins un dispositif ( 111, 121 ) magnétique prévu sur un véhicule ( 11, 12 ) et pouvant être, pour la transmission de force de la chaîne ( 21 à 23 ) de traction au véhicule ( 11, 12 ), couplé magnétiquement à la chaîne ( 21 à 23 ) de traction.

2. Système de traction de véhicule suivant la revendication 1, dans lequel
la chaîne ( 21 à 23 ) de traction est mobile en faisant le tour le long d'une deuxième voie de communication sensiblement parallèle.

3. Système de traction de véhicule suivant l'une des revendications 1 ou 2, dans lequel
il est prévu sur le véhicule ( 11, 12 ) un deuxième dispositif magnétique, qui peut être couplé magnétiquement à une deuxième chaîne ( 21 à 23 ) de traction mobile en sens contraire le long de la voie de communication.

4. Système de traction de véhicule suivant l'une des revendications 1 à 3, dans lequel
la transmission de force de la chaîne ( 21 à 23 ) de traction au véhicule ( 11, 12 ) peut être réglée en réglant un entrefer pouvant être prescrit entre la chaîne ( 21 à 23 ) de traction et le dispositif ( 111, 121 ) magnétique.

5. Système de traction de véhicule suivant l'une des revendications 1 à 4, dans lequel
des éléments de la chaîne ( 21 à 23 ) de traction sont constitués sous la forme d'éléments d'un rotor à cage asynchrone.

6. Système de traction de véhicule suivant l'une des revendications 1 à 5, dans lequel
le au moins un dispositif ( 111, 121 ) magnétique est constitué sous la forme d'un dispositif à aimant permanent.

7. Groupe de traction d'un véhicule comprenant
- un dispositif ( 111, 121 ) magnétique, qui, pour la transmission de force d'une chaîne ( 21 à 23 ) de traction à un véhicule ( 11, 12 ), peut être couplé magnétiquement à la chaîne ( 21 à 23 ) de traction.

8. Procédé pour faire fonctionner un système de traction de véhicule suivant l'une des revendications 1 à 6, dans lequel
- on fait fonctionner au moins une chaîne ( 21 à 23 ) de traction faisant le tour à une vitesse de rotation sensiblement constante,
**caractérisé en ce que**
- on accélère un véhicule ( 11, 12 ) en produisant un couplage magnétique entre une chaîne ( 21 à 23 ) de traction se déplaçant dans le sens de la marche le long de la voie ( 4 ) de communication et un dispositif ( 111, 121 ) magnétique tourné vers cette chaîne,
- on freine un véhicule ( 11, 12 ) en produisant un couplage magnétique entre une chaîne ( 21 à 23 ) de traction se déplaçant dans le sens de la marche le long de la voie ( 4 ) de communication et un dispositif ( 111, 121 ) magnétique tourné vers cette chaîne.

9. Programme de commande pour faire fonctionner un système de traction de véhicule suivant l'une des revendications 1 à 6, qui peut être chargé dans une mémoire de travail d'un ordinateur et qui a au moins une partie de code, dans la réalisation de laquelle
- on fait fonctionner au moins une chaîne ( 21 à 23 ) de traction faisant le tour à une vitesse de rotation sensiblement constante,
- on accélère un véhicule ( 11, 12 ) en produisant un couplage magnétique entre une chaîne ( 21 à 23 ) de traction se déplaçant dans le sens de la marche le long de la voie ( 4 ) de communication et un dispositif ( 111, 121 ) magnétique tourné vers cette chaîne,
- on freine un véhicule ( 11, 12 ) en produisant un couplage magnétique entre une chaîne ( 21 à 23 ) de traction se déplaçant dans le sens de la marche le long de la voie ( 4 ) de communication et un dispositif ( 111, 121 ) magnétique tourné vers cette chaîne,
lorsque le programme de commande se déroule dans l'ordinateur.
